(19) Europäisches Patentamt
European Patent Office
Office européen des brevets

(11) **EP 3 183 529 B1**

(12) **EUROPÄISCHE PATENTSCHRIFT**

(45) Veröffentlichungstag und Bekanntmachung des Hinweises auf die Patenterteilung:
**24.07.2019 Patentblatt 2019/30**

(21) Anmeldenummer: **15762916.3**

(22) Anmeldetag: **13.08.2015**

(51) Int Cl.:
*F28F 9/26* *(2006.01)*　*F28D 7/16* *(2006.01)*
*F28F 13/08* *(2006.01)*　*B23K 20/02* *(2006.01)*
*B23K 20/12* *(2006.01)*　*F16L 43/00* *(2006.01)*
*F16L 43/02* *(2006.01)*　*A23L 3/22* *(2006.01)*

(86) Internationale Anmeldenummer:
**PCT/EP2015/001664**

(87) Internationale Veröffentlichungsnummer:
**WO 2016/026560 (25.02.2016 Gazette 2016/08)**

(54) **KRÜMMER FÜR EINEN ROHRBÜNDEL-WÄRMEAUSTAUSCHER FÜR GROSSE PRODUKTDRÜCKE, HERSTELLVERFAHREN FÜR EINEN ROHRBÜNDEL-WÄRMEAUSTAUSCHER MIT EINEM SOLCHEN KRÜMMER UND VERWENDUNG EINES ROHRBÜNDEL-WÄRMEAUSTAUSCHERS FÜR GROSSE PRODUKTDRÜCKE MIT EINEM SOLCHEN KRÜMMER IN EINER ZERSTÄUBUNGSTROCKNUNGSANLAGE**

MANIFOLD FOR A TUBE BUNDLE HEAT EXCHANGER FOR LARGE PRODUCT PRESSURES, METHOD FOR PRODUCING A TUBE BUNDLE HEAT EXCHANGER COMPRISING A MANIFOLD OF SAID TYPE AND USE OF A TUBE BUNDLE HEAT EXCHANGER FOR LARGE PRODUCT PRESSURES WITH SAID TYPE OF MANIFOLD IN A SPRAY DRYING SYSTEM

COUDE POUR ÉCHANGEUR DE CHALEUR À FAISCEAU DE TUBES POUR PRESSIONS DE PRODUIT IMPORTANTES, PROCÉDÉ DE PRODUCTION D'UN COUDE POUR ÉCHANGEUR DE CHALEUR À FAISCEAU DE TUBES POUR PRESSIONS DE PRODUIT IMPORTANTES DOTÉ D'UN TEL COUDE ET UTILISATION D'UN ÉCHANGEUR DE CHALEUR À FAISCEAU DE TUBES POUR PRESSIONS DE PRODUIT IMPORTANTES DOTÉ D'UN TEL COUDE DANS UNE INSTALLATION DE SÉCHAGE PAR PULVÉRISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2014 DE 102014012279**

(43) Veröffentlichungstag der Anmeldung:
**28.06.2017 Patentblatt 2017/26**

(73) Patentinhaber: **GEA TDS GmbH**
**31157 Sarstedt (DE)**

(72) Erfinder:
• **SCHLAG, Brigitte**
**42659 Solingen (DE)**
• **SCHWENZOW, Uwe**
**48683 Ahaus (DE)**
• **ROLLE, Ulrich**
**48351 Everswinkel (DE)**

• **ZIMMERMANN, Dietrich**
**96103 Hallstadt (DE)**
• **GRIMM, Markus**
**23883 Klein Zecher (DE)**
• **TERLINDE, Matthias**
**48683 Ahaus (DE)**
• **JÄCKERING, Wolfgang**
**48488 Emsbüren-Berge (DE)**

(74) Vertreter: **Hauck Patentanwaltspartnerschaft mbB**
**Postfach 11 31 53**
**20431 Hamburg (DE)**

(56) Entgegenhaltungen:
EP-A1- 2 586 551　EP-A1- 2 693 097
WO-A1-00/31489　DE-A1- 2 041 184
DE-A1- 3 700 443　DE-A1-102005 059 463
DE-U1-202004 002 082　GB-A- 190 910 792
JP-A- H01 289 611　US-A- 1 790 151
US-A- 4 323 114

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- **DATABASE WPI Section Ch, Week 197928 Thomson Scientific, London, GB; Class D14, AN 1979-52013B XP002751834, -& NL 7 714 208 A (M STORK FRIESLAND BV) 25. Juni 1979 (1979-06-25)**

**Beschreibung**

TECHNISCHES GEBIET

Die Erfindung betrifft einen Krümmer mit Kreisquerschnitt mit einem Umlenkwinkel von 180 Grad für einen Rohrbündel-Wärmeaustauscher für große Produktdrücke, mit einem Flansch an jedem Eintritt und Austritt des Krümmers und mit den weiteren Merkmalen des Oberbegriffs des Anspruchs 1 sowie ein Herstellverfahren für einen solchen Krümmer. Darüber hinaus betrifft die Erfindung einen Rohrbündel-Wärmeaustauscher für große Produktdrücke mit einem solchen Krümmer, mit parallel angeordneten, in Reihe geschalteten Rohrbündeln, wobei die Innenrohre des Rohrbündels von einem Produkt durchströmt werden, und, in Strömungsrichtung des Produkts gesehen und bezogen auf ein beliebiges Rohrbündel, ein Austritt des Rohrbündels mit einem Eintritt eines benachbarten, nachgeordneten Rohrbündels und ein Eintritt des Rohrbündels mit einem Austritt eines benachbarten, vorgeordneten Rohrbündels wechselseitig jeweils über den Krümmer mit einem Umlenkwinkel von 180 Grad fluiddurchlässig miteinander verbunden sind. Die Erfindung betrifft ferner die Verwendung eines Rohrbündel-Wärmeaustauschers für große Produktdrücke in einer Zerstäubungstrocknungsanlage.

STAND DER TECHNIK

Ein Krümmer der gattungsgemäßen Art ist in der US 1 790 151 A offenbart, die einen Rohrbündel-Wärmeaustauscher beschreibt, bei dem benachbarte Rohrbündel wechselseitig jeweils über eine Krümmeraggregation mit einem Umlenkwinkel von 180 Grad fluiddurchlässig miteinander verbunden sind. Die Krümmeraggregation besteht aus zwei jeweils einstückigen, abmessungsgleichen, in einer gemeinsamen Ebene spiegelbildlich angeordneten Krümmerhälften, die an ihrer Verbindungstelle miteinander über eine Flanschverbindung und jeweils mit dem zugeordneten Rohrbündel über eine weitere Flanschverbindung lösbar verbunden sind. Die jeweilige Krümmerhälfte besitzt einen rotationssymmetrischen, stetig gekrümmten Innendurchgang, der sich über seinen Verlauf in seinem Durchtrittsquerschnitt kontinuierlich ändert, und zwar von einem maximalen Durchtrittsquerschnitt an der Flanschverbindung zum zugeordneten Rohrbündel zu einem minimalen Durchtrittsquerschnitt an der Flanschverbindung der beiden Krümmerhälften miteinander.

Die Herstellung pulverförmiger Nahrungsmittelprodukte, insbesondere Milchprodukte, wie beispielsweise leicht lösliche Nahrungsmittel für Kleinkinder, erfolgt in vielen Fällen durch Zerstäubungs- oder Sprühtrocknung in einem sogenannten Trocknerturm. Dort wird ein zuvor auf einen bestimmten Gehalt an Trockensubstanz in einem Verdampfer bzw. einem Eindampfer aufkonzentriertes und anschließend in einem Erhitzer auf eine definierte Temperatur angewärmtes, vornehmlich dünnflüssiges Ausgangsprodukt in einen heißen Luftstrom entweder über Scheiben oder, wie im vorliegenden bevorzugten Fall, über eine Düse, insbesondere eine Einstoffdüse, zerstäubt. Dieser Düse wird das aus dem Erhitzer austretende Ausgangsprodukt mittels einer Hochdruckkolbenpumpe, einer sogenannten Düsenpumpe, mit einem Druck, der bis ca. 300 bar reichen kann, zugeführt. Ein signifikanter Höhenunterschied zwischen der Düsenpumpe, die im unteren Außenbereich des Trocknerturms angeordnet ist, und der Düse, die sich im sogenannten Heißraum im Kopfraum des Trocknerturms befindet, wird über eine Steigleitung überbrückt, die planmäßig oder zwangsläufig auch als Heißhaltestrecke fungiert. Um eine möglichst lange und hygienisch einwandfreie Lagerung des pulverförmigen Nahrungsmittelproduktes sicherzustellen, muss das Endprodukt eine gute Löslichkeit aufweisen und möglichst keimfrei sein. Die erforderliche Keimfreiheit ergibt sich durch das Abtöten von Mikroorganismen weitestgehend für das aus dem Erhitzer austretende Ausgangsprodukt, wenn dieser mit einem geeigneten Temperatur- und Haltezeitverlauf geführt und wenn in die Betrachtung die als Heißhaltestrecke fungierende Steigleitung zur Düse einbezogen wird. Für die Herstellung von sogenanntem "low heat pulver" ist eine Temperatur von max. 77 °C, von sogenanntem "high heat pulver" von ca. 85 °C und von sogenanntem "ultra high heat pulver" von >125 °C erforderlich.

Die zwangsläufige Verweildauer des Ausgangsprodukts in der Steigleitung nach vorheriger Hochdruckbehandlung in Verbindung mit einer heißen Temperatur beeinflusst die Löslichkeit des Endprodukts in unerwünschter Weise. Darüber hinaus führt die lange Heißhaltung in der Steigleitung zu einer Denaturierung des Ausgangsprodukts. Dies bedeutet in der Regel auch Qualitätsminderung des Endprodukts. Eine diesbezügliche Denaturierung kann beispielsweise die Pulverqualität von Babyfood derart beeinflussen, dass dessen vollständige Löslichkeit nicht mehr sichergestellt ist und dadurch eine nicht hinnehmbare Klümpchenbildung in der zubereiteten Babynahrung auftritt.

Eine Verbesserung des mikrobakteriellen Status des Ausgangsprodukts vor dem Eindampfer, beispielsweise durch Entkeimung mittels Mikrofiltration, ist bekannt, sie ist aufwändig, aber verbessert den mikrobakteriellen Status des Endprodukts.

Die notwendige Keimfreiheit bis zum Eintritt in die Düse kann auch durch die Düsenpumpe gefährdet werden, da diese das Ausgangsprodukt mit vertretbarem technischem Aufwand nicht unter aseptischen Bedingungen fördern kann. Aseptische Förderbedingungen erfordern hingegen einen erheblichen technischen Aufwand, der in der Praxis in der Regel nicht betrieben wird oder betrieben werden kann. Über die Kolben der Düsenpumpe können Keime aus der Umgebungsluft in das Ausgangsprodukt eingetragen werden, sodass dort eine Reinfektion stattfindet. Das pulverförmige Endprodukt kann dann verkeimt sein und die Verkeimung wird unter der Einwirkung der im Endprodukt notorisch verbleibenden Restfeuchte zeitabhängig zunehmen.

Eine aseptische Förderung des aus dem Erhitzer austretenden flüssigen Ausgangsprodukts ist nach dem Stand der Technik in der stromabwärts angeordneten Düsenpumpe nur mit erhöhtem technischem Aufwand möglich. Zum Erreichen der notwendigen Sterilität des unter hohem Druck aus der Düsenpumpe austretenden flüssigen Ausgangsprodukts könnte eine geeignete thermische Behandlung dieses Ausgangsprodukts auf dem Weg zur Düse in einem Hochdruck-Wärmeaustauscher vorgesehen werden. Dieser Hochdruck-Wärmeaustauscher könnte unmittelbar vor der Düse angeordnet werden, wodurch die bisher notwendige Steigleitung mit ihren vorstehend beschriebenen negativen Auswirkungen entfiele. Diese Anordnung würde auch weiterhin den Betrieb einer nicht aseptisch fördernden Düsenpumpe erlauben.

In diesem Zusammenhang wurde bereits vorgeschlagen, den Hochdruck-Wärmeaustauscher als hinreichend druckfestes, gewendeltes Monorohr auszubilden, das zur Beheizung von außen mit Dampf beaufschlagt wird. Dieser Vorschlag ist jedoch nicht zielführend, da kein gleichmäßiger Wärmeeintrag über die Außenseite und über die gesamte Länge des Monorohres und damit keine gleiche Verweilzeit für alle Teilchen des im Monorohr strömenden Ausgangsprodukts sichergestellt ist.

Ein Wärmeaustauscher, der die Forderungen nach einem hinreichend gleichmäßigen Wärmeeintrag und nach einer für alle Teilchen des Ausgangsprodukts gleichen Verweilzeit erfüllt, wäre grundsätzlich ein sogenannter Rohrbündel-Wärmeaustauscher, der prinzipiell an die Stelle des vorgenannten Monorohres treten könnte. Eine derartige Lösung scheitert aber an der Tatsache, dass derartige Rohrbündel-Wärmeaustauscher für Produktdrücke bis 300 bar bislang nicht zur Verfügung stehen.

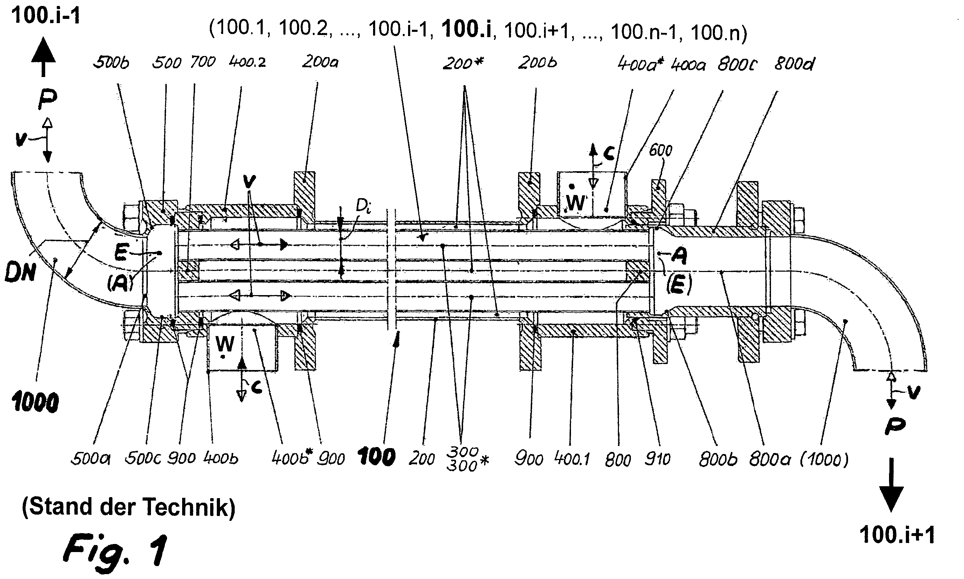

Die grundsätzliche Bauweise eines Rohrbündel-Wärmeaustauschers ist beispielsweise in der DE 94 03 913 U1 beschrieben. Die DE 10 2005 059 463 A1 offenbart ebenfalls einen derartigen Rohrbündel-Wärmeaustauscher und zeigt darüber hinaus auf, wie eine Anzahl von Rohrbündeln in diesem Wärmeaustauscher parallel angeordnet und fluiddurchgängig mittels Verbindungsbogen oder Verbindungsarmaturen in Reihe geschaltet werden können. Eine diesbezügliche Anordnung zeigt **Figur 1** dieser Anmeldung (Stand der Technik).

Das thermisch zu behandelnde Produkt durchströmt dabei die Innenrohre. Diese selbst und ihre Einbindung in eine beiderseitige sogenannte Rohrträgerplatte für hohe Produktdrücke im Rahmen der vorstehend kurz umrissenen Anwendung hinreichend druckfest zu dimensionieren stellt den Fachmann auf dem Weg zu einem geeigneten Hochdruck-Rohrbündel-Wärmeaustauscher nicht vor das eigentliche Problem. Eine hinreichende Dimensionierung der Wandstärke der Innenrohre macht das eigentliche Rohrbündel und seine Einbindung in die beiderseitigen Rohrträgerplatten für Drücke auch bis 300 bar oder sogar etwas darüber hinaus beständig.

Nicht verfügbar sind aber die vorstehend erwähnten Verbindungsbogen oder Verbindungsarmaturen mit Flanschen gemäß **Figur 1** der Anmeldung in für die Nahrungsmittelproduktion geeigneter Edelstahlqualität, die solche Drücke aushalten, die die relativ engen Abstände der zu verbindenden Rohrträgerplatten mit entsprechend großer Krümmung, d.h. mit relativ kleinem Krümmungsradius, überbrücken und dabei den notwendigen, durch die benachbarten Rohrträgerplatten sehr maßgenau determinierten Abstand der Flansche ebenfalls sehr maßhaltig und nachhaltig, vorzugsweise im Zehntelmillimeterbereich, darstellen. Die gängigen Wandstärken handelsüblicher Rohrbogen mit 180 Grad Umlenkung sind allenfalls für Prozessdrücke geeignet, die im unteren zweistelligen Bereich liegen.

Die GB 10 792 A offenbart die Herstellung eines Krümmers mit einem Umlenkwinkel von 180 Grad, der aus zwei Krümmerhälften mit jeweils 90 Grad Umlenkwinkel besteht, die an ihrer zugeordneten Verbindungsstelle stoffschlüssig, beispielsweise durch Schweißung, miteinander verbunden sind. Ausgangsmaterial für jede Krümmerhälfte ist ein gerades Rohrstück aus relativ dünnem Blech, das nach geeigneter Vorbereitung, unter anderem durch einseitiges Aufschlitzen des Rohrmantels in axialer Richtung an einem Rohrende, durch plastische Umformung des geschlitzten Rohrendes die erforderliche Krümmung erfährt.

Im Nachfolgenden wird für den in Rede stehenden Verbindungsbogen oder die Verbindungsarmatur mit einem aus der beschriebenen Anwendung resultierenden Umlenkwinkel von 180 Grad durchgängig der in der Strömungsmechanik gebräuchliche Begriff "Krümmer" verwendet.

Die Fachwelt sucht seit langem nach einer Lösung, wie die Vorteile genutzt werden können, die sich aus einer Anordnung eines geeigneten Hochdruck-Wärmeaustauschers, der unmittelbar vor oder in kurzem Abstand von der Düse im Trocknerturm angeordnet ist, ergeben würden. Die Vorteile sind signifikant und stellen sich, wie folgt, dar:

- Durch diesbezügliche Anordnung eines Hochdruck-Rohrbündel-Wärmeaustauschers kann bei gleicher Pulverqualität die Austrittstemperatur am Erhitzer und dementsprechend auch an der Düse um 1 bis 4 °C erhöht werden.

- Es besteht die Aussicht, den hier vorgestellten erfindungsgemäßen Hochdruck-Rohrbündel-Wärmeaustauscher auch für eine UHT-Behandlung des Ausgangsprodukts bis in den aseptischen Bereich zu verwenden mit dem Ziel der Herstellung von sogenanntem "ultra high heat pulver".

- Eine Erhöhung der Temperatur des an der Düse austretenden Ausgangsprodukts um 1 °C hat eine Effizienzsteigerung, d.h. eine Steigerung der Mengenleistung des Trocknerturms von 2,5 bis 3 % zur Folge

$$\left(\frac{(2,5-3)\%}{1°C}\right).$$

Es ist Aufgabe der vorliegenden Erfindung, einen Krümmer für einen Rohrbündel-Wärmeaustauscher für große Produktdrücke zu schaffen, der die notwendige Festigkeit und nachhaltige Maßhaltigkeit besitzt und sich dabei im Zuge seiner Herstellung strömungstechnisch optimieren lässt, damit die Krümmerverluste und die Neigung zu Produktablagerungen möglichst gering sind und eine gute Reinigungsfähigkeit im Durchfluss gegeben ist. Darüber hinaus ist es Aufgabe der Erfindung, ein Herstellverfahren für einen solchen Krümmer, einen Rohrbündel-Wärmeaustauscher mit einem solchen Krümmer sowie eine Verwendung eines Rohrbündel-Wärmeaustauschers für große Produktdrücke mit einem solchen Krümmer in einer Zerstäubungstrocknungsanlage anzugeben.

## ZUSAMMENFASSUNG DER ERFINDUNG

Diese Aufgabe wird durch einen Krümmer mit den Merkmalen des Anspruchs 1 gelöst. Vorteilhafte Ausführungsformen des Krümmers sind Gegenstand der Unteransprüche. Der erfindungsgemäße Krümmer findet vorteilhaft Anwendung in einem Rohrbündel-Wärmeaustauscher für große Produktdrücke nach Anspruch 17. Ein Herstellverfahren für den erfindungsgemäßen Krümmer wird mit den Merkmalen des Nebenanspruchs 12 angegeben. Vorteilhafte Ausgestaltungen des erfindungsgemäßen Herstellverfahrens sind Gegenstand der zugeordneten Unteransprüche. Die Verwendung eines erfindungsgemäßen Rohrbündel-Wärmeaustauschers für große Produktdrücke mit einem solchen Krümmer in einer Zerstäubungstrocknungsanlage ist Gegenstand des Anspruchs 18.

Ein erfindungsgemäßer Krümmer mit einem Umlenkwinkel von 180 Grad ist im gesamten Verlauf seiner Durchtrittsquerschnitte jeweils in an sich bekannter Weise in Form von Kreisquerschnitten ausgebildet, und er weist jeweils endseitig, ebenfalls in an sich bekannter Weise, einen Flansch auf. Diese Flansche werden, ebenfalls in an sich bekannter Weise, mit dem zugeordneten Rohrbündel verschraubt. Hierzu besitzen die Flansche auf einem Lochkreis verteilt angeordnete Durchgangsbohrungen für den Bolzen des jeweils verwendeten Schrauben-Verbindungsmittels. Bei letzterem kann es sich um eine Durchgangsschraube, um eine Stiftschraube oder um eine Kopfschraube handeln, wobei die jeweiligen Schraubverbindungen insgesamt so ausgestaltet sind, dass sie den in dem Hochdruck-Rohrbündel-Wärmeaustauscher auftretenden hohen Kräften mit Sicherheit standhalten.

Die Erfindung geht aus von einem Rohrbündel-Wärmeaustauscher, wie er in der DE 10 2005 059 463 A1 oder auch in der gattungsbildenden US 1,790,151 A offenbart ist, wobei die Innenrohre hinsichtlich ihrer Wandstärke und die Einbindung der Innenrohre in die jeweilige endseitige Rohrträgerplatte so dimensioniert sind, dass die Gesamtkonstruktion Drücken bis 300 bar oder auch etwas darüber hinaus standhält. Die einzelnen Rohrbündel werden in der vorstehend beschriebenen Weise mittels der erfindungsgemäßen Krümmer miteinander verbunden.

Der an sich bekannte Krümmer besteht aus zwei, jeweils einstückigen Krümmerhälften, wobei jede Krümmerhälfte an ihrem dem Flansch abgewandten Ende eine Verbindungsstelle aufweist. Der Verlauf der Durchtrittsquerschnitte jeder Krümmerhälfte wird durch rotationssymmetrische Durchtrittsöffnungen gebildet. Dabei erstreckt sich wenigstens eine einerseits vom Flansch und wenigstens eine andererseits von der zugeordneten Verbindungsstelle in jeweils koaxialer Anordnung auf Rotationsachsen. Die erste und die zweite Rotationsachse der Durchtrittsöffnungen der ersten Krümmerhälfte und die dritte und die vierte Rotationsachse der Durchtrittsöffnungen der zweiten Krümmerhälfte verlaufen in einer gemeinsamen Ebene, die für jeden Flansch eine Meridianebene darstellt. Dabei schneiden sich die erste und die zweite Rotationsachse in einem ersten Schnittpunkt und die dritte und die vierte Rotationsachse in einem zweiten Schnittpunkt. Dem ersten Schnittpunkt ist auf der ersten Rotationsachse eine durchdringende erste und auf der zweiten Rotationsachse eine durchdringende zweite Durchtrittsöffnung zugeordnet, die einander jeweils nur einseitig und nicht jeweils vollständig durchdringen. In gleicher Weise ist dem zweiten Schnittpunkt auf der dritten Rotationsachse eine durchringende dritte und auf der vierten Rotationsachse eine durchdringende vierte Durchtrittsöffnung zugeordnet, die ebenfalls einander jeweils nur einseitig durchdringen.

Die Krümmerhälften sind erfindungsgemäß an der zugeordneten Verbindungsstelle stoffschlüssig miteinander verbunden. Zur Herstellung der stoffschlüssigen Verbindung kommen vorzugsweise Schweißverfahren mit und ohne Zusatzmaterial, Reib- oder Pressschweißverfahren zur Anwendung. Die Krümmerhälften werden erfindungsgemäß durch Zerspanung, zweckmäßig aus Rundmaterial und aus dem Vollen, hergestellt. Verfügbare und hinlänglich bekannte Zerspanungsverfahren sind Bohren, Drehen und Fräsen, die auf sogenannten mehrachsigen Bearbeitungszentren nacheinander oder auch parallel durchführt werden können. Diese Zerspanungsverfahren erlauben es, den Verlauf der Durchtrittsquerschnitte jeder Krümmerhälfte durch rotationssymmetrische Durchtrittsöffnungen herzustellen.

Die einander durchdringenden Durchtrittsöffnungen sind jeweils kegelstumpfförmig ausgebildet und ihre jeweilige Verjüngung ist zum jeweils zugeordneten ersten oder zweiten Schnittpunkt hin orientiert. Dadurch erreicht man durch den sich verjüngenden Durchtrittsquerschnitt eine Beschleunigung der Hauptströmung, damit eine Verringerung der Ablösungen an der inneren Krümmung und im Endergebnis eine Verminderung der Krümmerverluste.

Um die Strömungsverluste im Krümmer zu minimieren und unstetige Querschnittsübergänge zu vermeiden, an denen sich Produkt ablagern und ansetzen kann, wodurch eine Reinigung im Durchfluss erschwert würde, sieht ein Vorschlag vor, dass an den einander durchdringenden Durchtrittsöffnungen im radial außenseitigen Verlauf des zugeordneten Durchtrittsquerschnitts der jeweiligen Krümmerhälfte eine Ausrundung mit einem äußeren Krümmungsradius und im radial innenseitigen Verlauf des zugeordneten Durchtrittsquerschnitts eine Abrundung mit einem inneren Krümmungsradius vorgesehen ist. Die Abmessungsverhältnisse werden dabei zweckmäßig so gewählt, dass zumindest die Ausrundung maschinell herstellbar ist. Die Krümmerverluste an der inneren Krümmung werden bekanntlich stark vermindert, wenn die Ablösungen hier verringert werden. Dies erreicht man beim erfindungsgemäßen Krümmer durch einen möglichst großen inneren Krümmungsradius.

Es ist aus der Strömungslehre bekannt, dass bei Krümmern mit gleichem Ein- und Austrittsquerschnitt eine gewisse Querschnittserweiterung im Scheitel von Nutzen ist, die zu geringeren Krümmerverlusten führt. Diesen Sachverhalt nutzt der erfindungsgemäße Krümmer dadurch, dass ein Scheitelquerschnitt der Krümmerhälfte gegenüber den dem Scheitelquerschnitt beiderseits benachbarten Durchtrittsquerschnitten erweitert ist. Diese Erweiterung und auch die Bedingung gleichen Ein- und Austrittsquerschnitts sind bei dem erfindungsgemäßen Krümmer einfach ausführbar, weil die Durchtrittsöffnungen durch die spanenden Formgebungsverfahren ohne Schwierigkeit an den gewünschten Querschnittsverlauf anpassbar sind. Damit ist es möglich, den erfindungsgemäßen Krümmer gegenüber dem sog. Standardrohrbogen bzw. dem "normalen" Krümmer strömungstechnisch zu optimieren.

Der Verlauf der Durchtrittsquerschnitte der jeweiligen Krümmerhälfte wird zweckmäßig durch mehr als eine rotationssymmetrische Durchtrittsöffnung, ausgehend einerseits vom Flansch und andererseits von der Verbindungsstelle, ausgebildet. In diesem Falle ist vorgesehen, dass die rotationssymmetrischen Durchtrittsöffnungen an ihrer jeweiligen Übergangsstelle zu einer benachbarten Durchtrittsöffnung durchmessergleich aneinandergereiht sind. Diese Ausführungsform weist zwar keine sprunghaften Übergänge mehr auf, sie ist jedoch strömungstechnisch mit Blick auf die Verringerung der Krümmerverluste noch weiter optimierbar, wenn die Übergangsstellen, wie dies ebenfalls vorgeschlagen wird, stetig gekrümmt ausgeführt sind.

Die zerspanende Herstellung der Durchtrittsquerschnitte der jeweiligen Krümmerhälfte vereinfacht sich signifikant, wenn die Rotationsachsen jeweils geradlinig verlaufen.

Im Endergebnis soll der erfindungsgemäße Krümmer einen Umlenkwinkel von 180 Grad aufweisen. Dieses Ziel wird grundsätzlich immer erreicht, unabhängig davon, ob die beiden Krümmerschenkel der jeweiligen Krümmerhälfte einen spitzen, einen stumpfen oder einen rechten Winkel bilden. Die strömungsgünstigste und dabei gleichzeitig am einfachsten ausführbare Form des Krümmers ergibt sich, wenn sich, wie dies eine vorteilhafte Ausführungsform vorsieht, die erste und die zweite Rotationsachse und die dritte und die vierte Rotationsachse jeweils unter einem rechten Winkel, d.h. einem Winkel von 90 Grad schneiden. Eine weitere signifikante Vereinfachung der Herstellung liegt nach einem anderen Vorschlag vor, wenn die Krümmerhälften kongruent ausgebildet sind und somit die Teilevielfalt zur Herstellung des Krümmers auf eine einzige Ausführungsform einer Krümmerhälfte reduziert ist.

Die stoffschlüssige Verbindung der Verbindungsstellen ist vorzugsweise eine Schweißverbindung, die wiederum vorzugsweise mehrlagig orbital ausgeführt ist.

Um eine nachhaltige Maßhaltigkeit des sehr genau einzuhaltenden Abstandes der Flansche des gefügten Krümmers sicherzustellen, weil Abweichungen von diesem Abstand nicht von den ebenfalls sehr maßhaltig beabstandeten, über den Krümmer zu verbindenden beiden Rohrbündeln kompensiert oder korrigiert werden können, ohne dass Undichtheiten an den gedichteten Verbindungsstellen auftreten, sieht eine vorteilhafte Ausführungsform vor, dass am Flansch jeweils eine Anschlagfläche vorgesehen ist, die in einer zu einer Stirnfläche der Verbindungsstelle parallelen Ebene orientiert ist und die um ein Schrumpfmaß gegenüber der Stirnfläche zurücksteht. Dieses Schrumpfmaß ist so bemessen, dass nach Herstellung und Abkühlung der Verbindung der beiden Krümmerhälften zum vollständigen Krümmer die beiden Anschlagflächen aneinander anliegen und somit eine unverrückbare und undeformierbare Beabstandung der beiden Flansche für deren maßliche Endbearbeitung gegeben ist.

Ein erfindungsgemäßes Herstellverfahren für einen Krümmer mit den vorstehend beschriebenen Merkmalen sieht vor, dass in einem ersten Herstellungsschritt die jeweilige Krümmerhälfte aus Rundmaterial und aus dem Vollen durch spanende Bearbeitung hergestellt wird. Dabei erhalten eine aus rotationssymmetrischen Durchtrittsöffnungen bestehende Innenkontur und eine erste Außenkontur, die nicht mit dem Rohrbündel-Wärmeaustauscher bzw. seinen Rohrbündeln unmittelbar adaptiert ist, eine jeweilige Endkontur und eine mit dem Rohrbündel-Wärmeaustauscher bzw. seinen Rohrbündeln unmittelbar adaptierte zweite Außenkontur wird vorbearbeitet. In einem zweiten Herstellungsschritt werden alsdann die beiden Krümmerhälften an ihrer jeweiligen Verbindungsstelle zu dem Krümmer stoffschlüssig miteinander verbunden. Die stoffschlüssige Verbindung wird vorzugsweise durch ein manuelles oder maschinelles orbitales Schweißverfahren hergestellt, das ein- oder mehrlagig durchgeführt werden kann. Bei dem Schweißverfahren kann es sich auch um eine Reib- oder Pressschweißung handeln. In einem dritten Herstellungsschritt erhält die mit dem Rohrbündel-Wärmeaustauscher bzw. seinen Rohrbündeln adaptierte zweite Außenkontur jeweils eine Endkontur durch spanende Bearbeitung.

Es ist mit Blick auf eine nachhaltige Maßhaltigkeit des fertiggestellten Krümmers von Vorteil, wenn nach Abschluss des Schweißverfahrens oder im Zuge des mehrlagigen Schweißverfahrens wenigstens ein Spannungsfreiglühen durchgeführt wird.

Um eine unverrückbare und undeformierbare Beabstandung der beiden Flansche für deren maßliche Endbearbeitung sicherzustellen, sieht eine vorteilhafte Ausgestaltung des erfindungsgemäßen Herstellverfahrens vor, dass eine am Flansch jeweils vorgesehene Anschlagfläche über ein Schrumpfmaß derart positioniert ist, dass nach Fertigstellung der stoffschlüssigen Verbindung eine Anlage der Anschlagflächen aneinander infolge einer Kontraktion, die durch Abkühlung der im Zuge des Stoffschlusses erwärmten Bereiche des Krümmers bedingt ist, eine Fertigstellung der zweiten Außenkontur mit der maßgetreuen Endkontur sicherstellt.

Ein erfindungsgemäßer Rohrbündel-Wärmeaustauscher für große Produktdrücke besitzt in an sich bekannter Weise parallel angeordnete, in Reihe geschaltete Rohrbündel, wobei Innenrohre des Rohrbündels von einem Produkt durchströmt werden, und, in Strömungsrichtung des Produkts gesehen und bezogen auf ein beliebiges Rohrbündel, ein Austritt des Rohrbündels mit einem Eintritt eines benachbarten, nachgeordneten Rohrbündels und ein Eintritt des Rohrbündels mit einem Austritt eines benachbarten, vorgeordneten Rohrbündels wechselseitig jeweils über einen Krümmer mit einem Umlenkwinkel von 180 Grad fluiddurchlässig miteinander verbunden sind. Erfindungsgemäß ist vorgesehen, dass dabei jeweils ein Krümmer Verwendung findet, der die vorstehend beschriebenen erfindungsgemäßen Merkmale aufweist.

Eine erfindungsgemäße Verwendung eines Rohrbündel-Wärmeaustauschers für große Produktdrücke mit einem Krümmer nach der Erfindung in einer Zerstäubungstrocknungsanlage sieht vor, dass der Rohrbündel-Wärmeaustauscher unmittelbar vor oder in kurzem Abstand von der Düse im Trocknerturm angeordnet ist.

Durch die beschriebene Erfindung stellen sich die vorstehend genannten und angestrebten Vorteile ein, die sich im Kern, wie folgt, darstellen:

- Durch diesbezügliche Anordnung eines Hochdruck-Rohrbündel-Wärmeaustauschers kann bei gleicher Pulverqualität die Austrittstemperatur am Erhitzer und dementsprechend auch an der Düse um 1 bis 4 °C erhöht werden.

- Eine Erhöhung der Temperatur des an der Düse austretenden Ausgangsprodukts um 1 °C hat eine Effizienzsteigerung, d.h. eine Steigerung der Mengenleistung des Trocknerturms von 2,5 bis 3 % zur Folge

$$\left(\frac{(2{,}5-3)\%}{1°C}\right).$$

## KURZBESCHREIBUNG DER ZEICHNUNGEN

Einen Stand der Technik bildet

Figur 1 ab, die einen Mittelschnitt durch ein sog. Rohrbündel als modularer Teil eines ggf. aus einer Vielzahl solcher Rohrbündel bestehenden Rohrbündel-Wärmeaustauschers zeigt, wobei auf jeder Seite ein hinlänglich bekannter handelsüblicher Krümmer in Form eines kreisförmigen Verbindungsbogens angeordnet ist und wobei eine erfindungsgemäße Ausgestaltung eines Krümmers in der dargestellten Funktion, aber für große Produktdrücke, und ein erfindungsgemäßes Herstellverfahren für diesen Krümmer Gegenstand der vorliegenden Erfindung sind.

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausführungsformen realisiert ist, wird in der Zeichnung ein bevorzugtes Ausführungsbeispiel des Krümmers für große Produktdrücke nach der Erfindung dargestellt und nachfolgend hinsichtlich seiner Ausgestaltung, seines Herstellverfahrens und seiner Verwendung in einem Hochdruck-Rohrbündel-Wärmeaustauscher beschrieben. Es zeigen

Figur 2 im Meridianschnitt gemäß einem in Figur 4 mit **C-D** gekennzeichneten Schnittverlauf eine bevorzugte Ausführungsform einer Krümmerhälfte des Krümmers nach der Erfindung;

Figur 3 in perspektivischer Darstellung die im Meridianschnitt aufgetrennte Krümmerhälfte gemäß **Figur 2**;

Figur 4 in perspektivischer Darstellung eine Ansicht der Krümmerhälfte gemäß **Figur 2**;

Figur 5 im Meridianschnitt den Krümmer nach der Erfindung, gefügt mit zwei kongruent ausgebildeten Krümmerhälften gemäß **Figur 2**;

Figur 6 im Meridianschnitt und im Ausschnitt die Innenkontur der Krümmerhälfte gemäß **Figur 2** im Umlenkungsbereich und

Figur 7 in perspektivischer Darstellung die im Meridianschnitt aufgetrennte Krümmerhälfte gemäß **Figur 2** im Umlenkungsbereich zwecks Darstellung der Durchdringung im Bereich der inneren Krümmung.

DETAILLIERTE BESCHREIBUNG

Ein in der Regel aus einer Vielzahl (eine Anzahl n) von Rohrbündeln 100.1 bis 100.n (allgemeiner Fall: 100.1, 100.2, ..., 100.i-1, 100.i, 100.i+1, ..., 100.n-1, 100.n) zusammengesetzter Rohrbündel-Wärmeaustauscher 100 nach dem Stand der Technik, wobei mit 100.i ein beliebiges Rohrbündel bezeichnet wird (**Figur 1**; siehe auch DE 94 03 913 U1), besteht in seinem mittleren Teil aus einem einen Außenkanal 200* begrenzenden Außenmantel 200 mit einem, bezogen auf die Darstellungslage, linksseitig angeordneten festlagerseitigen Außenmantelflansch 200a und einem rechtsseitig angeordneten loslagerseitigen Außenmantelflansch 200b. An dem letzteren schließt sich ein von einem ersten Gehäuse 400.1 begrenzter erster Querkanal 400a* mit einem ersten Anschlussstutzen 400a und an den festlagerseitigen Außenmantelflansch 200a schließt sich ein von einem zweiten Gehäuse 400.2 begrenzter zweiter Querkanal 400b* mit einem zweiten Anschlussstutzen 400b an. Eine Anzahl von sich achsparallel zum Außenmantel 200 durch den Außenkanal 200* erstreckenden, gemeinsam einen Innenkanal 300* bildenden Innenrohre 300 mit jeweils einem Rohrinnendurchmesser $D_i$, beispielsweise beginnend mit vier und danach auch bis neunzehn ansteigend und ggf. auch mehr an der Zahl, sind endseitig jeweils in einer festlagerseitigen Rohrträgerplatte 700 bzw. einer loslagerseitigen Rohrträgerplatte 800 (beide auch als Rohrspiegelplatte bezeichnet) abgestützt und dort abdichtend in dieser verschweißt. Diese Gesamtanordnung ist über eine nicht näher bezeichnete Öffnung am zweiten Gehäuse 400.2 in den Außenmantel 200 eingeführt und über einen festlagerseitigen Austauscherflansch 500 mit dem zweiten Gehäuse 400.2 unter Zwischenschaltung von jeweils einer Dichtung 900, vorzugsweise einer Flachdichtung, zusammengespannt (Festlager 500, 700, 400.2).

Die beiden Gehäuse 400.1, 400.2 sind gegenüber dem jeweils benachbarten Außenmantelflansch 200b, 200a ebenfalls mit einer Dichtung 900 abgedichtet, wobei das rechtsseitig angeordnete erste Gehäuse 400.1 in Verbindung mit dem Außenmantel 200 über einen loslagerseitigen Austauscherflansch 600 unter Zwischenschaltung vorzugsweise eines O-Ringes 910 gegen das linksseitig angeordnete Festlager 500, 700, 400.2 gepresst wird. Die loslagerseitige Rohrträgerplatte 800 greift durch eine nicht näher bezeichnete Bohrung im loslagerseitigen Austauscherflansch 600 hindurch und findet gegenüber letzterem ihre Abdichtung mittels des dynamisch beanspruchten O-Ringes 910, der darüber hinaus das erste Gehäuse 400.1 statisch gegen den loslagerseitigen Austauscherflansch 600 abdichtet. Letzterer und die loslagerseitige Rohrträgerplatte 800 bilden ein sog. Loslager 600, 800, welches die Längenänderungen der in der loslagerseitigen Rohrträgerplatte 800 eingeschweißten Innenrohre 300 infolge Temperaturänderung in beiden axialen Richtungen zulässt.

Abhängig von der Anordnung des jeweiligen Rohrbündels 100.1 bis 100.n im Rohrbündel-Wärmeaustauscher 100 und seiner jeweiligen Beschaltung können die Innenrohre 300, bezogen auf die Darstellungslage, entweder von links nach rechts oder umgekehrt von einem Produkt P durchströmt werden, wobei die mittlere Strömungsgeschwindigkeit im Innenrohr 300 und damit im Innenkanal 200* mit v gekennzeichnet ist. Die querschnittsmäßige Auslegung erfolgt in der Regel derart, dass diese mittlere Strömungsgeschwindigkeit v auch in einem Verbindungsbogen 1000 vorliegt, der einerseits mit dem festlagerseitigen Austauscherflansch 500 und andererseits mittelbar mit einem mit der loslagerseitigen Rohrträgerplatte 800 fest verbundenen loslagerseitigen Anschlussstutzen 800d verbunden ist. Mit den beiden in der Figur 1 nur jeweils zur Hälfte dargestellten Verbindungsbogen 1000 (sog. 180 Grad-Rohrbogen) wird ein in Rede stehendes Rohrbündel 100.i mit einem jeweils benachbarten Rohrbündel 100.i-1 bzw. 100.i+1 in Reihe geschaltet. Daher bildet einmal der festlagerseitige Austauscherflansch 500 einen Eintritt E für das Produkt P und der loslagerseitige Anschlussstutzen 800d beherbergt einen dazugehörenden Austritt A; beim jeweils benachbarten Rohrbündel 100.i-1 bzw. 100.i+1 kehren sich diese Ein- und Austrittsverhältnisse jeweils entsprechend um.

Der festlagerseitige Austauscherflansch 500 weist eine erste Anschlussöffnung 500a auf, die einem Nenndurchmesser DN und damit einem entsprechenden Nenndurchtrittsquerschnitt des dort angeschlossenen Verbindungsbogens 1000 entspricht und die in der Regel so bemessen ist, dass dort die der mittleren Strömungsgeschwindigkeit v im Innenrohr 300 bzw. Innenkanal 300* entsprechende Strömungsgeschwindigkeit vorliegt. In gleicher Weise ist auch eine zweite Anschlussöffnung 800a in dem loslagerseitigen Anschlussstutzen 800d bemessen, wobei sich die jeweilige Anschlussöffnung 500a bzw. 800a auf einen jeweils erweiterten ersten 500c bzw. erweiterten zweiten Durchtrittsquerschnitt 800c im Bereich zur benachbarten Rohrträgerplatte 700 bzw. 800 durch einen konischen ersten 500b bzw. konischen zweiten Übergang 800b erweitert.

In Abhängigkeit von der Richtung der Strömungsgeschwindigkeit v im Innenrohr 300 bzw. Innenkanal 300* strömt das zu behandelnde Produkt P entweder über die erste Anschlussöffnung 500a oder die zweite Anschlussöffnung 800a dem Rohrbündel 100.1 bis 100.n zu, sodass entweder die festlagerseitige Rohrträgerplatte 700 oder die loslagerseitige Rohrträgerplatte 800 angeströmt wird. Da in jedem Falle ein Wärmeaustausch zwischen Produkt P in den Innenrohren 300 bzw. den Innenkanälen 300* und einem Wärmeträgermedium W im Außenmantel 200 bzw. in dem Außenkanal 200* im Gegenstrom zu erfolgen hat, strömt dieses Wärmeträgermedium W entweder dem ersten Anschlussstutzen 400a oder aber dem zweiten Anschlussstutzen 400b mit einer im Außenmantel 200 vorliegenden Strömungsgeschwindigkeit c zu.

Der vorstehend in seinem konstruktiven Aufbau beispielhaft beschriebene Rohrbündel-Wärmeaustauscher 100 nach dem Stand der Technik (DE 94 03 913 U) stellt eine seit Jahrzehnten bekannte Ausführungsform dar. Vielfältige konstruktive Abwandlungen hinsichtlich Lagerung und Abdichtung des Rohrbündels 100.i sind bekannt. Zu den notwendigen Merkmalen im Rahmen der vorliegenden Erfindung gehört, dass eine Anzahl n parallel angeordnete, in Reihe geschaltete Rohrbündel 100.i (mit i = 1 bis n) vorgesehen sind. Dabei werden Innenrohre 300 des jeweiligen Rohrbündels 100.i von einem Produkt P durchströmt. In Strömungsrichtung des Produkts P gesehen und bezogen auf ein beliebiges Rohrbündel 100.i ist ein Austritt A des Rohrbündels 100.i mit einem Eintritt E eines benachbarten, nachgeordneten Rohrbündels 100.i+1 über einen Krümmer mit einem Umlenkwinkel von 180 Grad fluiddurchlässig verbunden. In gleicher Weise ist ein Eintritt E des Rohrbündels 100.i mit einem Austritt A eines benachbarten, vorgeordneten Rohrbündels 100.i-1 verbunden.

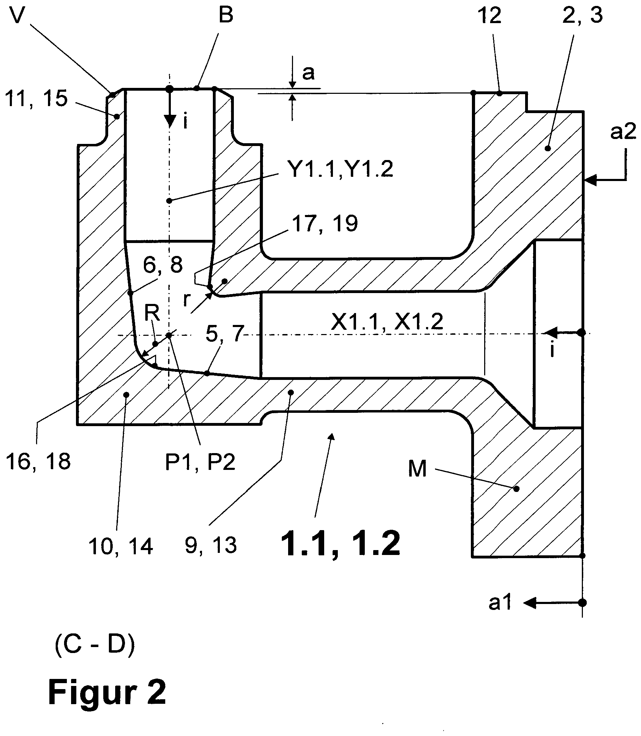

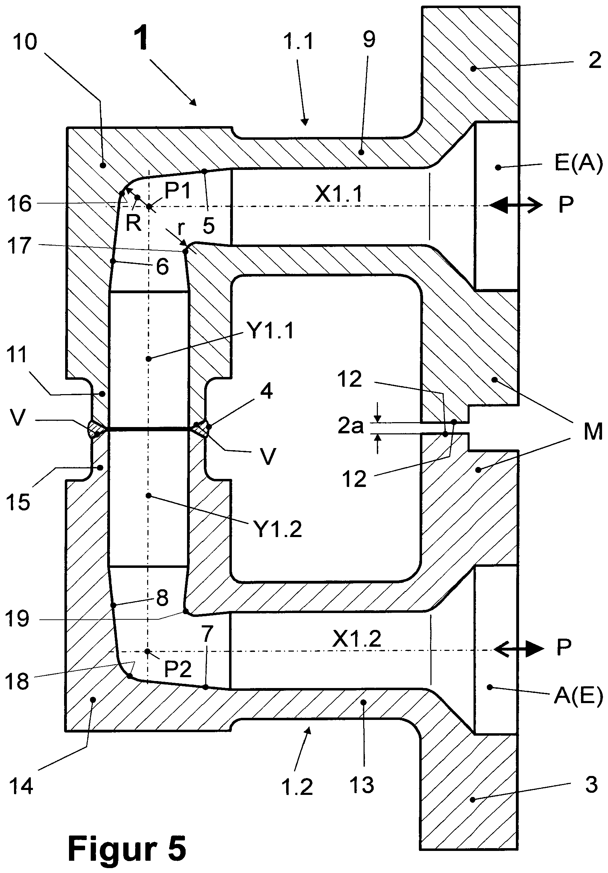

Ein fertiggestellter Krümmer 1 **(Figur 5)** besteht aus zwei jeweils einstückigen, vorzugsweise kongruenten Krümmerhälften, einer ersten Krümmerhälfte 1.1 und einer zweiten Krümmerhälfte 1.2 **(Figuren 2 bis 7)**. Der ersten Krümmerhälfte 1.1 ist ein erster Flansch 2 und der zweiten Krümmerhälfte 1.2 ist ein zweiter Flansch 3 zugeordnet, wobei jede Krümmerhälfte 1.1, 1.2 an ihrem dem Flansch 2, 3 abgewandten Ende eine Verbindungsstelle V aufweist. An der Verbindungsstelle V sind die Krümmerhälften 1.1, 1.2 stoffschlüssig miteinander verbunden. Die stoffschlüssige Verbindung ist vorzugsweise eine Schweißnaht 4, die vorzugsweise mehrlagig orbital ausgeführt ist. Jeder Flansch 2, 3 kann entweder den Eintritt E oder den Austritt A für das Produkt P aufnehmen, wobei die jeweilige diesbezügliche Zuordnung von der Durchströmungsrichtung des Produkts P bestimmt ist **(Figur 5)**.

Der Verlauf der Durchtrittsquerschnitte jeder Krümmerhälfte 1.1, 1.2 wird durch rotationssymmetrische Durchtrittsöffnungen gebildet. Wenigstens eine Durchtrittsöffnung erstreckt sich einerseits vom ersten Flansch 2 in koaxialer Anordnung auf einer ersten Rotationsachse X1.1 und wenigstens eine Durchtrittsöffnung erstreckt sich andererseits von der zugeordneten Verbindungsstelle V in koaxialer Anordnung auf einer zweiten Rotationsachse Y1.1. In gleicher Weise erstrecken sich wenigstens eine Durchtrittsöffnung einerseits vom zweiten Flansch 3 in koaxialer Anordnung auf einer dritten Rotationsachse X1.2 und wenigstens eine Durchtrittsöffnung auf einer vierten Rotationsachse Y1.2 **(Figuren 2 bis 7)**. Im Ausführungsbeispiel sind von diesen Durchtrittsöffnungen, in der Reihenfolge der vorstehenden Nennung, nur eine durchdringende erste Durchtrittsöffnung 5 und eine durchdringende zweite Durchtrittsöffnung 6 in der ersten Krümmerhälfte 1.1 und eine durchdringende dritte Durchtrittsöffnung 7 und eine durchdringende vierte Durchtrittsöffnung 8 in der zweiten Krümmerhälfte 1.2 bezeichnet.

Die erste und die zweite Rotationsachse X1.1, Y1.1 der Durchtrittsöffnungen 5, 6 der ersten Krümmerhälfte 1.1 und die dritte und die vierte Rotationsachse X1.2, Y1.2 der Durchtrittsöffnungen 7, 8 der zweiten Krümmerhälfte 1.2 verlaufen in einer gemeinsamen Ebene, die für jeden Flansch 2, 3 eine Meridianebene M darstellt, und sie verlaufen vorzugsweise geradlinig. Dabei schneiden sich die erste und die zweite Rotationsachse X1.1, Y1.2 in einem ersten Schnittpunkt P1 und die dritte und die vierte Rotationsachse X1.2, Y1.2 in einem zweiten Schnittpunkt P2, vorzugsweise jeweils unter einem rechten Winkel, d.h. einem Winkel von 90 Grad.

Dem ersten Schnittpunkt P1 ist auf der ersten Rotationsachse X1.1 die durchdringende erste Durchtrittsöffnung 5 und auf der zweiten Rotationsachse Y1.1 die durchdringende zweite Durchtrittsöffnung 6 zugeordnet, die einander jeweils einseitig durchdringen. In gleicher Weise ist dem zweiten Schnittpunkt P2 auf der dritten Rotationsachse X1.2 die durchdringende dritte 7 und auf der vierten Rotationsachse Y1.2 die durchdringende vierte Durchtrittsöffnung 8 zugeordnet, die ebenfalls einander jeweils einseitig durchdringen. Die jeweils einander einseitig durchdringenden ersten bis vierten Durchtrittsöffnungen 5, 6 und 7, 8 sind jeweils kegelstumpfförmig ausgebildet und ihre jeweilige Verjüngung ist zum jeweils zugeordneten Schnittpunkt P1, P2 hin orientiert.

An den einander durchdringenden ersten bis vierten Durchtrittsöffnungen 5, 6 und 7, 8 ist im radial außenseitigen Verlauf des zugeordneten Durchtrittsquerschnitts der jeweiligen Krümmerhälfte 1.1, 1.2 eine erste Ausrundung 16 bzw. eine zweite Ausrundung 18 mit einem äußeren Krümmungsradius R und im radial innenseitigen Verlauf des zugeordneten Durchtrittsquerschnitts eine erste Abrundung 17 bzw. eine zweite Abrundung 19 mit einem inneren Krümmungsradius r vorgesehen (siehe **Figur 2**).

Die rotationssymmetrischen Durchtrittsöffnungen der jeweiligen Krümmerhälften 1.1 und 1.2 sind an ihrer jeweiligen Übergangsstelle zu einer benachbarten Durchtrittsöffnung zur Vermeidung von sprunghaften, verlustbehafteten Querschnittsübergängen durchmessergleich aneinandergereiht, wobei es weiterhin von Vorteil ist, diese Übergangsstellen stetig gekrümmt auszuführen, wie dies im Bereich der Flansche 2, 3 an einer Stelle beispielhaft vorgesehen ist (siehe **Figuren 2, 5**).

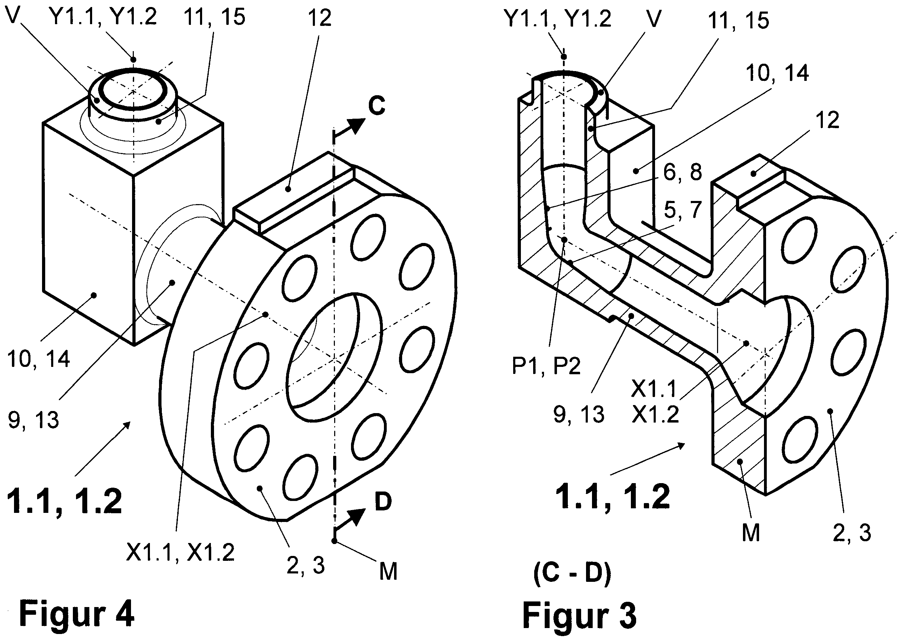

Die erste und die zweite Krümmerhälfte 1.1, 1.2 setzen sich vorzugsweise aus folgenden geometrischen Grundkörpern zusammen, und zwar in der nachfolgend genannten Reihenfolge (siehe insbesondere **Figur 4** in Verbindung mit **Figur 5**):
dem kreiszylindrischen ersten Flansch 2 bzw. kreiszylindrischen zweiten Flansch 3, einem zylindrischen ersten Abschnitt 9 bzw. zylindrischen vierten Abschnitt 13, einem prismatischen zweiten Abschnitt 10 bzw. prismatischen fünften Abschnitt 14 und einem zylindrischen dritten Abschnitt 11 bzw. einem zylindrischen sechsten Abschnitt 15.

Am ersten Flansch 2 und am zweiten Flansch 3 ist jeweils eine Anschlagfläche 12 vorgesehen (siehe insbesondere **Figur 2** in Verbindung mit den **Figuren 4 und 5**), die in einer zu einer Stirnfläche B der Verbindungsstelle V parallelen Ebene orientiert ist und die um ein Schrumpfmaß a gegenüber der Stirnfläche B zurücksteht. Vor der Herstellung der Schweißnaht 4 und in der justierten Endlage der Krümmerhälften 1.1, 1.2 sind die Anschlagflächen 12 um das zweifache Schrumpfmaß 2a voneinander entfernt (**Figur 5**). Dieses zweifache Schrumpfmaß 2a ist so bemessen, dass nach Abkühlung der hergestellten Schweißnaht 4 die beiden Anschlagflächen 12 aneinander anliegen und somit eine unverrückbare und undeformierbare Beabstandung der beiden Flansche 2, 3 für deren maßliche Endbearbeitung gegeben ist.

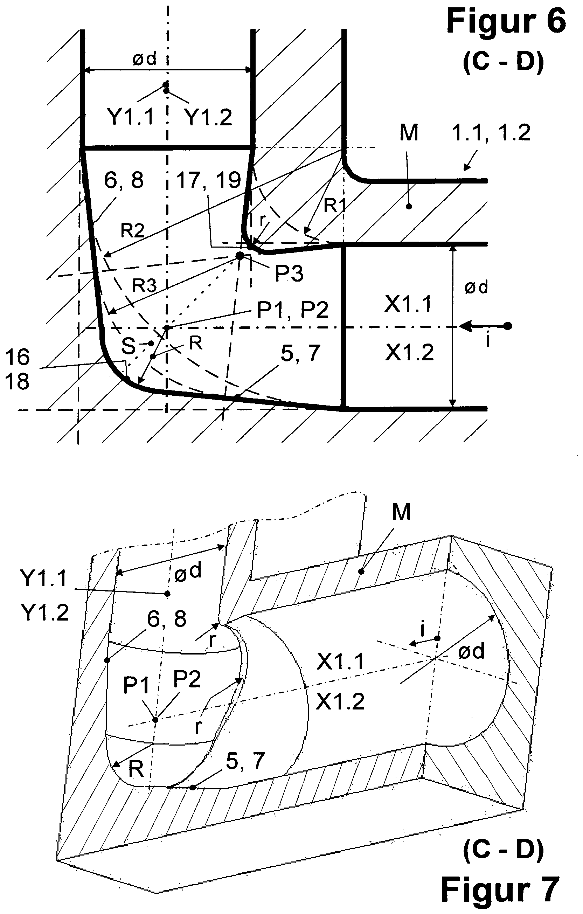

**Figur 6** zeigt Einzelheiten einer Innenkontur i der Krümmerhälfte 1.1, 1.2 in deren jeweiligem Umlenkungsbereich. Ein "normaler" Krümmer bzw. ein sog. Standardrohrbogen mit 180-Grad Umlenkung mit gleichem Ein- und Austrittsquerschnitt, der jeweils durch einen Durchmesser Ød gekennzeichnet ist, besitzt einen äußeren Radius R2 (Ausrundung) und einen inneren Radius R1 (Abrundung), wobei sich beide durch den Durchmesser Ød unterscheiden (Geometriebedingung R2 = R1 + Ød). Im Unterschied zu diesem "normalen" Krümmer weist die erste Krümmerhälfte 1.1 nach der Erfindung die jeweils kegelstumpfförmig ausgebildete durchdringende erste und durchdringende zweite Durchtrittsöffnung 5, 6 auf, die einander einseitig durchdringen. In gleicher Weise gestalten sich die Geometrieverhältnisse in der zweiten Krümmerhälfte 1.2 nach der Erfindung mit den einander einseitig durchdringenden dritten und vierten Durchtrittsöffnungen 7, 8. Es ist ersichtlich, dass durch die jeweilige kegelstumpfförmige Ausgestaltung der Durchdringungsöffnungen 5 bis 8 eine jeweilige Querschnittsverjüngung zu einem jeweiligen Scheitelquerschnitt S der Krümmerhälfte 1.1, 1.2 gegeben ist, deren strömungstechnische Konsequenz bekannt ist und vorstehend bereits thematisiert wurde. Um die Bedingung gleichen Durchtrittsquerschnitts im Durchdringungsbereich der durchdringenden ersten mit der durchdringenden zweiten Durchtrittsöffnung 5, 6 bzw. der durchringenden dritten mit der durchdringenden vierten Durchtrittsöffnung 7, 8, das heißt im gesamten Scheitelbereich der jeweiligen Krümmerhälfte 1.1, 1.2, zu realisieren, wären diese im jeweiligen radial außenseitigen Verlauf des zugeordneten Durchtrittsquerschnitts mit einem Radius konstanten Durchtrittsquerschnitts R3 auszurunden und im radial innenseitigen Verlauf mit dem inneren Krümmungsradius r abzurunden.

Die erfindungsgemäße Ausgestaltung der Innenkontur i im Umlenkungsbereich sieht demgegenüber vor, dass der Scheitelquerschnitt S der Krümmerhälfte 1.1, 1.2 gegenüber den dem Scheitelquerschnitt S beiderseits benachbarten Durchtrittsquerschnitten erweitert ist, was durch die Darstellung in **Figur 6** verdeutlicht ist. Die kegelförmigen einander durchdringenden ersten bis vierten Durchtrittsöffnungen 5, 6 und 7, 8 werden jeweils mit dem äußeren Krümmungsradius R (R < R3), der jeweils im Schnittpunkt P1 bzw. P2 angreift, ausgerundet, was ersichtlich zu einer Erweiterung des Scheitelquerschnitts S führt, weil die erste bzw. zweite Ausrundung 16, 18 gegenüber einer durch den Radius konstanten Durchtrittsquerschnitts R3 bestimmten Innenkontur radial weiter nach außen ausgreift.

**Figur 7** stellt in perspektivischer Darstellung den Durchdringungsbereich der durchdringenden ersten mit der durchdringenden zweiten Durchtrittsöffnung 5, 6 bzw. der durchdringenden dritten mit der durchdringenden vierten Durchtrittsöffnung 7, 8 im radial innenseitigen Verlauf des Durchtrittsquerschnitts der jeweiligen Krümmerhälfte 1.1, 1.2 dar. Ohne die erfindungsgemäße Abrundung mit dem inneren Krümmungsradius r ergäbe sich hier eine scharfkantige Durchdringungslinie, die sich in der Meridianebene M in **Figur 6** als ein Durchdringungspunkt P3 darstellen würde. Eine derartig scharfkantige Durchdringungslinie würde im Krümmungsbereich des Krümmers in jedem Falle zu Ablösungen der Strömung und damit zu erhöhten Krümmerverlusten führen. Zur Verringerung dieser Verluste ist es in besonderer Weise zielführend, wenn diese Durchdringungslinie, die, wie **Figur 7** deutlich zeigt, nur teilweise und über den Umfang mit unterschiedlicher scharfkantiger Ausprägung gegeben ist, im gesamten Bereich ihrer Ausprägung mit dem inneren Krümmungsradius r abgerundet ist.

Ein erfindungsgemäßes Herstellverfahren für einen Krümmer 1 mit den vorstehend beschriebenen Merkmalen sieht vor, dass in einem ersten Herstellungsschritt die jeweilige Krümmerhälfte 1.1, 1.2 aus Rundmaterial und aus dem Vollen durch spanende Bearbeitung hergestellt wird. Dabei erhalten eine aus rotationssymmetrischen Durchtrittsöffnungen bestehende Innenkontur i und eine erste Außenkontur a1, die nicht mit dem Rohrbündel-Wärmeaustauscher 100 bzw. dessen Rohrbündeln 100.1 bis 100.n unmittelbar adaptiert ist, eine jeweilige Endkontur und eine mit dem Rohrbündel-Wärmeaustauscher 100 unmittelbar adaptierte zweite Außenkontur a2 wird vorbearbeitet. Die zerspanende Bearbeitung erfolgt hierbei vorzugsweise auf einem mehrachsigen Bearbeitungszentrum, auf dem der Flansch 2, 3 und die zylindrischen Abschnitte 9, 13 und 11, 15 gedreht, die prismatischen Abschnitte 10, 14 und die Anschlagflächen 12 gefräst und die den Rotationsachsen X1.1, X1.2, Y1.1, Y1.2 zugeordneten Durchtrittsöffnungen gebohrt und/oder gedreht werden.

In einem zweiten Herstellungsschritt werden alsdann die beiden Krümmerhälften 1.1, 1.2 an ihrer jeweiligen Verbindungsstelle V zu dem Krümmer 1 stoffschlüssig miteinander verbunden. Die stoffschlüssige Verbindung wird vorzugsweise durch ein manuelles oder maschinelles orbitales Schweißverfahren hergestellt, das ein- oder mehrlagig durchgeführt werden kann.

In einem dritten Herstellungsschritt erhält die mit dem Rohrbündel-Wärmeaustauscher 100 bzw. dessen Rohrbündeln 100.1 bis 100.n adaptierte zweite Außenkontur a2, die zweckmäßig auch den endseitigen Teil des Eintritts E oder des Austritts A umfasst, eine Endkontur durch spanende Bearbeitung. In diese Endkontur wird zweckmäßig die Bearbeitung der vorstehend im Zusammenhang mit **Figur 1** beschriebenen ersten und zweiten Anschlussöffnung 500a, 800a, des konischen ersten und konischen zweiten Übergangs 500b, 800b und des erweiterten ersten und des erweiterten zweiten Durchtrittsquerschnitts 500c, 800c einbezogen.

Die Ausgestaltung des Rohrbündel-Wärmeaustauschers 100 nach **Figur 1** ist nur als ein mögliches Ausführungsbeispiel zu verstehen. Die Erfindung ist auf jedweden Rohrbündel-Wärmeaustauscher anwendbar, der für große Produktdrücke geeignet ist, bei dem Innenrohre eines Rohrbündels von einem Produkt durchströmt werden und bei dem die Rohrbündel in an sich bekannter Weise parallel angeordnet und in Reihe geschaltet sind. In einer solchen Anordnung sind, in Strömungsrichtung des Produkts gesehen und bezogen auf ein beliebiges Rohrbündel, ein Austritt des Rohrbündels mit einem Eintritt eines benachbarten, nachgeordneten Rohrbündels und ein Eintritt des Rohrbündels mit einem Austritt eines benachbarten, vorgeordneten Rohrbündels wechselseitig jeweils über einen Krümmer mit einem Umlenkwinkel von 180 Grad fluiddurchlässig miteinander verbunden. Erfindungsgemäß ist vorgesehen, dass dabei jeweils ein Krümmer Verwendung findet, der die vorstehend beschriebenen erfindungsgemäßen Merkmale aufweist.

BEZUGSZEICHENLISTE DER VERWENDETEN ABKÜRZUNGEN

1     Krümmer
1.1     erste Krümmerhälfte
1.2     zweite Krümmerhälfte

2     erster Flansch
3     zweiter Flansch
4     Schweißnaht
5     durchdringende erste Durchtrittsöffnung
6     durchdringende zweite Durchtrittsöffnung
7     durchdringende dritte Durchtrittsöffnung
8     durchdringende vierte Durchtrittsöffnung
9     zylindrischer erster Abschnitt
10     prismatischer zweiter Abschnitt
11     zylindrischer dritter Abschnitt
12     Anschlagfläche
13     zylindrischer vierter Abschnitt
14     prismatischer fünfter Abschnitt
15     zylindrischer sechster Abschnitt
16     erste Ausrundung
17     erste Abrundung
18     zweite Ausrundung
19     zweite Abrundung

a     Schrumpfmaß

a1     erste Außenkontur
a2     zweite Außenkontur

Ød     Durchmesser
i     Innenkontur
r     innerer Krümmungsradius

A     Austritt (aus Flansch 2, 3)
B     Stirnfläche
E     Eintritt (in Flansch 2, 3)
M     Meridianebene

P1     erster Schnittpunkt
P2     zweiter Schnittpunkt
P3     Durchdringungspunkt

R     äußerer Krümmungsradius
R1     innerer Radius des normalen Krümmers
R2     äußerer Radius des normalen Krümmers
R3     Radius konstanten Durchtrittsquerschnitts

S     Scheitelquerschnitt
V     Verbindungsstelle

X1.1     erste Rotationsachse
X1.2     dritte Rotationsachse
Y1.1     zweite Rotationsachse
Y1.2     vierte Rotationsachse

**Figur 1 (Stand der Technik)**

100     Rohrbündel-Wärmeaustauscher
100.1     erstes Rohrbündel
100.2     zweites Rohrbündel
100.i     i-tes Rohrbündel
100.i-1     dem Rohrbündel 100.i vorgeschaltetes Rohrbündel
100.i+1     dem Rohrbündel 100.i nachgeschaltetes Rohrbündel
100.n-1     dem Rohrbündel 100.n vorgeschaltetes Rohrbündel
100.n     n-tes Rohrbündel
200     Außenmantel
200*     Außenkanal
200a     festlagerseitiger Außenmantelflansch
200b     loslagerseitiger Außenmantelflansch

300     Innenrohr
300*     Innenkanal

400.1     erstes Gehäuse
400a     erster Anschlussstutzen
400a*     erster Querkanal
400.2     zweites Gehäuse
400b     zweiter Anschlussstutzen
400b*     zweiter Querkanal

500 (festlagerseitiger) Austauscherflansch
500a erste Anschlussöffnung
500b konischer erster Übergang
500c erweiterter erster Durchtrittsquerschnitt

600 loslagerseitiger Austauscherflansch
700 festlagerseitige Rohrträgerplatte (Rohrspiegelplatte)

800 loslagerseitige Rohrträgerplatte (Rohrspiegelplatte)
800a zweite Anschlussöffnung
800b konischer zweiter Übergang
800c erweiterter zweiter Durchtrittsquerschnitt
800d (loslagerseitiger) Anschlussstutzen

900 Dichtung (Flachdichtung)
910 O-Ring

1000 Verbindungsbogen
c Strömungsgeschwindigkeit im Außenmantel
n Anzahl Rohrbündel (allgemeiner Fall: 100.1, 100.2, ..., 100.i-1, 100.i, 100.i+1, ..., 100.n-1, 100.n)
v mittlere Strömungsgeschwindigkeit im Innenrohr

A Austritt (Abströmseite der Rohrträgerplatte 700, 800)
$D_i$ Rohrinnendurchmesser (Innenrohr 300)
DN Nenndurchmesser des Verbindungsbogens
E Eintritt (Anströmseite der Rohrträgerplatte 700, 800)
W Wärmeträgermedium, allgemein
P Produkt (temperaturbehandelte Seite)

**Patentansprüche**

1. Krümmer mit Kreisquerschnitt mit einem Umlenkwinkel von 180 Grad für einen Rohrbündel-Wärmeaustauscher für große Produktdrücke, mit einem ersten und einem zweiten Flansch (2; 3) an jedem Eintritt (E) und Austritt (A) des Krümmers (1),

   • wobei der Krümmer (1) aus zwei, jeweils einstückigen Krümmerhälften (1.1, 1.2) besteht,
   • wobei jede Krümmerhälfte (1.1, 1.2) an ihrem dem Flansch (2, 3) abgewandten Ende eine Verbindungsstelle (V) aufweist,
   • wobei der Verlauf der Durchtrittsquerschnitte jeder Krümmerhälfte (1.1, 1.2) durch rotationssymmetrische Durchtrittsöffnungen gebildet wird, von denen sich wenigstens eine einerseits vom Flansch (2, 3) und wenigstens eine andererseits von der zugeordneten Verbindungsstelle (V) in jeweils koaxialer Anordnung auf Rotationsachsen (X1.1, Y1.1; X1.2, Y1.2) erstrecken,
   • wobei die erste und die zweite Rotationsachse (X1.1, Y1.1) der Durchtrittsöffnungen der ersten Krümmerhälfte (1.1) und die dritte und die vierte Rotationsachse (X1.2, Y1.2) der Durchtrittsöffnungen der zweiten Krümmerhälfte (1.2) in einer gemeinsamen Ebene verlaufen, die für jeden Flansch (2, 3) eine Meridianebene (M) darstellt,
   • wobei sich die erste und die zweite Rotationsachse (X1.1, Y1.2) in einem ersten Schnittpunkt (P1) und die dritte und die vierte Rotationsachse (X1.2, Y1.2) in einem zweiten Schnittpunkt (P2) schneiden,
   • wobei dem ersten Schnittpunkt (P1) auf der ersten Rotationsachse (X1.1) eine durchdringende erste (5) und auf der zweiten Rotationsachse (Y1.1) eine durchdringende zweite Durchtrittsöffnung (6) zugeordnet ist, die einander jeweils einseitig durchdringen, und
   • wobei dem zweiten Schnittpunkt (P2) auf der dritten Rotationsachse (X1.2) eine durchdringende dritte (7) und auf der vierten Rotationsachse (Y1.2) eine durchdringende vierte Durchtrittsöffnung (8) zugeordnet ist, die einander jeweils einseitig durchdringen,
   **dadurch gekennzeichnet,**
   • **dass** die Krümmerhälften (1.1, 1.2) aus Rundmaterial und aus dem Vollen durch spanende Bearbeitung hergestellt sind,
   • **dass** die Krümmerhälften (1.1, 1.2) an der zugeordneten Verbindungsstelle (V) stoffschlüssig miteinander verbunden sind, und
   • **dass** die ersten bis vierten Durchtrittsöffnungen (5, 6; 7, 8) jeweils kegelstumpfförmig ausgebildet sind und ihre jeweilige Verjüngung zum jeweils zugeordneten ersten oder zweiten Schnittpunkt (P1, P2) hin orientiert ist.

2. Krümmer nach Anspruch 1,
   **dadurch gekennzeichnet,**
   **dass** an den einander paarweise durchdringenden ersten bis vierten Durchtrittsöffnungen (5, 6; 7, 8) im radial außenseitigen Verlauf des zugeordneten Durchtrittsquerschnitts der jeweiligen Krümmerhälfte (1.1, 1.2) eine Ausrundung mit einem äußeren Krümmungsradius (R) und im radial innenseitigen Verlauf des zugeordneten Durchtrittsquerschnitts eine Abrundung mit einem inneren Krümmungsradius (r) vorgesehen ist.

3. Krümmer nach Anspruch 1 oder 2,
   **dadurch gekennzeichnet,**
   **dass** ein Scheitelquerschnitt (S) der Krümmerhälfte (1.1, 1.2) gegenüber den dem Scheitelquerschnitt (S) beiderseits benachbarten Durchtrittsquerschnitten erweitert ist.

4. Krümmer nach einem der Ansprüche 1 bis 3,

**dadurch gekennzeichnet,**
**dass** die rotationssymmetrischen Durchtrittsöffnungen an ihrer jeweiligen Übergangsstelle zu einer benachbarten Durchtrittsöffnung durchmessergleich aneinandergereiht sind.

5. Krümmer nach Anspruch 4,
   **dadurch gekennzeichnet,**
   **dass** die Übergangsstellen stetig gekrümmt ausgeführt sind.

6. Krümmer nach einem der Ansprüche 1 bis 5,
   **dadurch gekennzeichnet,**
   **dass** die Rotationsachsen (X1.1, Y1.1; X1.2, Y1.2) jeweils geradlinig verlaufen.

7. Krümmer nach einem der Ansprüche 1 bis 6,
   **dadurch gekennzeichnet,**
   **dass** sich die erste und die zweite Rotationsachse (X1.1, Y1.1) und die dritte und die vierte Rotationsachse (X1.2, Y1.2) jeweils unter einem Winkel von 90 Grad schneiden.

8. Krümmer nach einem der Ansprüche 1 bis 7,
   **dadurch gekennzeichnet,**
   **dass** die Krümmerhälften (1.1, 1.2) kongruent ausgebildet sind.

9. Krümmer nach einem der Ansprüche 1 bis 8,
   **dadurch gekennzeichnet,**
   **dass** die stoffschlüssige Verbindung der Verbindungsstellen (V) eine Schweißverbindung (4) ist.

10. Krümmer nach Anspruch 9,
    **dadurch gekennzeichnet,**
    **dass** die Schweißverbindung (4) mehrlagig orbital ausgeführt ist.

11. Krümmer nach einem der Ansprüche 1 bis 10,
    **dadurch gekennzeichnet,**
    **dass** am Flansch (2, 3) jeweils eine Anschlagfläche (12) vorgesehen ist, die in einer zu einer Stirnfläche (B) der Verbindungsstelle (V) parallelen Ebene orientiert ist und die um ein Schrumpfmaß (a) gegenüber der Stirnfläche (B) zurücksteht.

12. Herstellverfahren für einen Krümmer nach einem der Ansprüche 1 bis 11,
    **dadurch gekennzeichnet,**

    • **dass** in einem ersten Herstellungsschritt die jeweilige Krümmerhälfte (1.1, 1.2) aus Rundmaterial und aus dem Vollen durch spanende Bearbeitung hergestellt wird,
    • wobei eine aus rotationssymmetrischen Durchtrittsöffnungen bestehende Innenkontur (i) und eine erste Außenkontur (a1), die nicht mit dem Rohrbündel-Wärmeaustauscher (100)

bzw. dessen Rohrbündeln (100.1 bis 100.n) unmittelbar adaptiert ist, eine jeweilige Endkontur erhalten und eine mit dem Rohrbündel-Wärmeaustauscher (100) bzw. dessen Rohrbündeln unmittelbar adaptierte zweite Außenkontur (a2) vorbearbeitet wird,
• **dass** in einem zweiten Herstellungsschritt die beiden Krümmerhälften (1.1. 1.2) an ihrer jeweiligen Verbindungsstelle (V) zu dem Krümmer (1) stoffschlüssig miteinander verbunden werden, und
• **dass** in einem dritten Herstellungsschritt die mit dem Rohrbündel-Wärmeaustauscher (100) bzw. dessen Rohrbündeln adaptierte zweite Außenkontur (a2) eine Endkontur durch spanende Bearbeitung erhält.

13. Herstellverfahren nach Anspruch 12,
    **dadurch gekennzeichnet,**
    **dass** die stoffschlüssige Verbindung der Krümmerhälften (1.1, 1.2) durch ein orbitales Schweißverfahren hergestellt wird.

14. Herstellverfahren nach Anspruch 13,
    **dadurch gekennzeichnet,**
    **dass** das Schweißverfahren mehrlagig durchgeführt wird.

15. Herstellverfahren nach Anspruch 13 oder 14,
    **dadurch gekennzeichnet,**
    **dass** nach Abschluss des Schweißverfahrens oder im Zuge des mehrlagigen Schweißverfahrens wenigstens ein Spannungsfreiglühen durchgeführt wird.

16. Herstellverfahren nach einem der Ansprüche 12 bis 15,
    **dadurch gekennzeichnet,**
    **dass** eine am ersten und am zweiten Flansch (2, 3) jeweils vorgesehene Anschlagfläche (12) über ein Schrumpfmaß (a) derart positioniert ist, dass nach Fertigstellung der stoffschlüssigen Verbindung eine Anlage der Anschlagflächen (12) aneinander infolge einer Kontraktion, die durch Abkühlung der im Zuge des Stoffschlusses erwärmten Bereiche des Krümmers (1) bedingt ist, eine Fertigstellung der zweiten Außenkontur (a2) mit der maßgetreuen Endkontur sicherstellt.

17. Rohrbündel-Wärmeaustauscher (100) für große Produktdrücke, mit parallel angeordneten, in Reihe geschalteten Rohrbündeln (100.1, 100.2, ..., 100.i-1, 100.i, 100.i+1, ..., 100.n-1, 100.n), wobei Innenrohre des Rohrbündels von einem Produkt (P) durchströmt werden, und, in Strömungsrichtung des Produkts (P) gesehen und bezogen auf ein beliebiges Rohrbündel (100.i), ein Austritt (A) des Rohrbündels (100.i) mit einem Eintritt (E) eines benachbarten, nachgeordneten Rohrbündels (100.i+1) und ein Eintritt (E) des Rohrbündels (100.i) mit einem Austritt (A) eines benachbarten, vorgeordneten Rohrbündels (100.i-1) wechselseitig jeweils über einen Krümmer mit einem Umlenkwinkel von 180 Grad fluiddurchlässig miteinander verbunden sind, **gekennzeichnet**

**durch** einen Krümmer (1) mit den Merkmalen der Ansprüche 1 bis 11.

18. Verwendung eines Rohrbündel-Wärmeaustauschers (100) für große Produktdrücke nach Anspruch 17 in einer Zerstäubungstrocknungsanlage unmittelbar vor oder in kurzem Abstand von der Düse im Trocknerturm.

**Claims**

1. A manifold having a circular cross-section with a deflection angle of 180 degrees for a tube bundle heat exchanger for high product pressures, comprising first and second flanges (2; 3) at each inlet (E) and outlet (A) of the manifold (1),

   • wherein the manifold (1) consists of two manifold halves (1.1, 1.2), each in one piece,
   • each manifold half (1.1, 1.2) having a connection point (V) at its end remote from the flange (2, 3),
   • wherein the profile of the passage cross-sections of each manifold half (1.1, 1.2) is formed by rotationally symmetrical passage openings of which at least one extends on the one side from the flange (2, 3) and at least one on the other side from the associated connecting point (V) in a respective coaxial arrangement on axes of rotation (X1.1, Y1.1; XI.2, Y1.2),
   • wherein the first and second axes of rotation (X1.1, Y1.1) of the passage openings of the first manifold half (1.1) and the third and fourth axes of rotation (XI.2, Y1.2) of the passage openings of the second manifold half (1.2) extend in a common plane which represents a meridian plane (M) for each flange (2, 3),
   • wherein the first and second rotational axes (X1.1, Y1.2) intersect at a first intersection (P1) and the third and fourth rotational axes (XI.2, Y1.2) intersect at a second intersection (P2),
   • wherein the first intersection point (P1) on the first axis of rotation (X1.1) is assigned a penetrating first opening (5) and on the second axis of rotation (Y1.1) a penetrating second opening (6), which penetrate each other on one side, and
   • wherein a penetrating third opening (7) is associated with the second intersection point (P2) on the third axis of rotation (XI.2) and a penetrating fourth opening (8) is associated with the fourth axis of rotation (Y1.2), each opening penetrating one another on one side **characterized**
   • **in that** the manifold halves (1.1, 1.2) are produced from round material and from the solid by machining,
   • **in that** the manifold halves (1.1, 1.2) are connected to one another in a material-locking manner at the associated connection point (V), and
   • -in that the first to fourth passage openings (5, 6; 7, 8) are each frustoconical in shape and their respective taper is oriented towards the respectively associated first or second intersection point (P1, P2).

2. Manifold according to claim 1, **characterised in that** a rounding with an outer radius of curvature (R) is provided at the first to fourth passage openings (5, 6; 7, 8) which penetrate one another in pairs in the radially outer course of the associated passage cross-section of the respective manifold half (1.1, 1.2) and a rounding with an inner radius of curvature (r) is provided in the radially inner course of the associated passage cross-section.

3. Manifold according to one of claims 1 or 2, **characterized in that** a vertex cross-section (S) of the manifold half (1.1, 1.2) is widened with respect to the passage cross-sections adjacent to the vertex cross-section (S) on both sides.

4. Manifold according to one of claims 1 to 3, **characterized in that** the rotationally symmetrical passage openings are arranged in a sequence of equal diameters at their respective transition points to an adjacent passage opening.

5. Manifold according to claim 4, **characterised in that** the transition points are designed to be continuously curved.

6. Manifold according to one of claims 1 to 5, **characterized in that** the axes of rotation (X1.1, Y1.1; X1.2, Y1.2) each run in a straight line.

7. Manifold according to one of claims 1 to 6, **characterized in that** the first and second axes of rotation (X1.1, Y1.1) and the third and fourth axes of rotation (X1.2, Y1.2) each intersect at an angle of 90 degrees.

8. Manifold according to any of claims 1 to 7, **characterized in that** the manifold halves (1.1, 1.2) are congruent.

9. Manifold according to one of claims 1 to 8, **characterized in that** the material-locking connection of the connection points (V) is a welded connection (4).

**10.** Manifold according to claim 9, **characterised in that** the welded connection (4) is multilayer orbital.

**11.** Manifold according to one of claims 1 to 10, **characterized in that** a respective stop face (12) is provided on the flange (2, 3), which stop face (12) is oriented in a plane parallel to an end face (B) of the connecting point (V) and which stands back relative to the end face (B) by a shrinkage dimension (a).

**12.** Method of manufacturing a manifold according to any one of claims 1 to 11, **characterized in that**,

• in a first manufacturing step, the respective manifold halves (1.1, 1.2) are manufactured from round material and from the solid by machining,
• wherein an inner contour (i) consisting of rotationally symmetrical passage openings and a first outer contour (a1), which is not directly adapted with the tube bundle heat exchanger (100) or its tube bundles (100.1 to 100.n), respectively, receive a respective final contour and a second outer contour (a2) directly adapted with the tube bundle heat exchanger (100) or its tube bundles, respectively, is pre-machined,
• in a second manufacturing step, the two manifold halves (1.1, 1.2) are connected at their respective connection point (V) to form the manifold (1) in a material-locking manner, and
• **in that**, in a third manufacturing step, the second outer contour (a2) adapted with the tube bundle heat exchanger (100) or its tube bundles receives a final contour by machining.

**13.** Manufacturing method according to claim 12, **characterised in that** the material-locking connection of the manifold halves (1.1, 1.2) is produced by an orbital welding method.

**14.** Manufacturing process according to claim 14, **characterised in that** the welding process is carried out in several layers.

**15.** Manufacturing process according to Claim 13 or 14, **characterized in that** at least one stress-relief annealing is carried out after completion of the welding process or in the course of the multi-layer welding process.

**16.** Manufacturing method according to one of claims 13 to 15, **characterised in that** a stop face (12) provided on each of the first and second flanges (2, 3) is positioned via a shrinkage dimension (a) in such a way that, after completion of the material-locking connection, the stop faces (12) bear against one another as a result of a contraction which is caused by cooling of the regions of the manifold (1) heated in the course of the material closure, ensures completion of the second outer contour (a2) with the true-to-size final contour.

**17.** Tube bundle heat exchanger (100) for large product pressures, with parallel tube bundles connected in series (100.1, 100.2, ..., 100.i - 1 , 100.i , 100.i + 1 , ..., 100.n - 1 , 100.n), wherein a product (P) flows through inner tubes of the tube bundle, and, viewed in the direction of flow of the product (P) and with respect to any tube bundle (100.i), an outlet (A) of the tube bundle (100.i) with an inlet (E) of an adjacent, downstream tube bundle (100.i + 1) and an inlet (E) of the tube bundle (100.i) with an outlet (A) of an adjacent, upstream tube bundle (100.i - 1) are mutually connected to one another in a fluid-permeable manner in each case via a manifold with a deflection angle of 180 degrees, **characterized by** a manifold (1) with the features of claims 1 to 12.

**18.** Use of a tube bundle heat exchanger (100) for high product pressures according to claim 17 in an atomisation drying plant immediately before or at a short distance from the nozzle in the dryer tower.

**Revendications**

**1.** Coude à section circulaire présentant un angle de déviation de 180 degrés, destiné à un échangeur de chaleur à faisceaux tubulaires pour de grandes pressions de produit, doté d'une première et d'une seconde bride (2 ; 3) à chaque entrée (E) et sortie (A) du coude (1),

• dans lequel le coude (1) est constitué de deux moitiés de coude respectivement d'un seul tenant (1.1, 1.2),
• dans lequel chaque moitié de coude (1.1, 1.2) présente un point de raccordement (V) à son extrémité opposée à la bride (2, 3),
• dans lequel la configuration des sections de passage de chaque moitié de coude (1.1, 1.2) est formée par des ouvertures de passage à symétrie de révolution, dont une au moins s'étend d'une part de la bride (2, 3) et une au moins s'étend d'autre part du point de raccordement (V) associé dans une disposition respectivement coaxiale sur des axes de rotation (X1.1, Y1.1 ; X1.2, Y1.2),
• dans lequel les premier et deuxième axes de rotation (X1.1, Y1.1) des ouvertures de passage de la première moitié de coude (1.1) ainsi que les troisième et quatrième axes de rotation (X1.2, Y1.2) des ouvertures de passage de la seconde moitié de coude (1.2) évoluent dans un plan commun, qui représente un plan méridien (M) pour chaque bride (2, 3),

• dans lequel les premier et deuxième axes de rotation (X1.1, Y1.2) se croisent en un premier point d'intersection (P1) ainsi que les troisième et quatrième axes de rotation (X1.2, Y1.2) en un second point d'intersection (P2),

• dans lequel une première ouverture de passage traversante (5) sur le premier axe de rotation (X1.1) et une seconde ouverture de passage traversante (6) sur le deuxième axe de rotation (Y1.1) sont associées au premier point d'intersection (P1), qui s'interpénètrent respectivement d'un côté, et

• dans lequel une troisième ouverture de passage traversante (7) sur le troisième axe de rotation (X1.2) et une quatrième ouverture de passage traversante (8) sur le quatrième axe de rotation (Y1.2) sont associées au second point d'intersection (P2), qui s'interpénètrent respectivement d'un côté,

**caractérisé en ce que**

• les moitiés de coude (1.1, 1.2) sont fabriquées à base de matériau rond et massif moyennant un usinage par enlèvement de copeaux,

• les moitiés de coude (1.1, 1.2) sont reliées l'une à l'autre par continuité de matière au point de raccordement (V) associé, et

• les ouvertures de passage (5, 6 ; 7, 8) de la première à la quatrième sont respectivement conçues sous une forme tronconique et leur rétrécissement respectif est orienté vers le premier ou le second point d'intersection (P1, P2) respectivement associé.

2. Coude selon la revendication 1, **caractérisé en ce qu**'un congé doté d'un rayon de courbure extérieur (R) est prévu au niveau des ouvertures de passage (5, 6 ; 7, 8) s'interpénétrant par paires de la première à la quatrième dans la configuration radiale du côté extérieur de la section de passage associée de la moitié de coude respective (1.1, 1.2) et un arrondi doté d'un rayon de courbure intérieur (r) est prévu dans la configuration radiale du côté intérieur de la section de passage associée.

3. Coude selon la revendication 1 ou 2, **caractérisé en ce qu**'une section jusqu'au sommet (S) de la moitié de coude (1.1, 1.2) est élargie vis-à-vis des sections de passage adjacentes des deux côtés à la section jusqu'au sommet (S).

4. Coude selon l'une des revendications 1 à 3, **caractérisé en ce que** les ouvertures de passage à symétrie de rotation sont juxtaposées avec le même diamètre au niveau de leur transition respective à une ouverture de passage adjacente.

5. Coude selon la revendication 4, **caractérisé en ce que** les transitions sont constamment exécutées sous une forme incurvée.

6. Coude selon l'une des revendications 1 à 5, **caractérisé en ce que** les axes de rotation (X1.1, Y1.1 ; X1.2, Y1.2) évoluent respectivement de manière rectiligne.

7. Coude selon l'une des revendications 1 à 6, **caractérisé en ce que** les premier et deuxième axes de rotation (X1.1, Y1.1) et les troisième et quatrième axes de rotation (X1.2, Y1.2) se croisent respectivement à un angle de 90 degrés.

8. Coude selon l'une des revendications 1 à 7, **caractérisé en ce que** les moitiés de coude (1.1, 1.2) sont conçues de manière congrue.

9. Coude selon l'une des revendications 1 à 8, **caractérisé en ce que** la jonction par continuité de matière des points de raccordement (V) est un assemblage soudé (4).

10. Coude selon la revendication 9, **caractérisé en ce que** l'assemblage soudé (4) est exécuté en version orbitale à passes multiples.

11. Coude selon l'une des revendications 1 à 10, **caractérisé en ce qu**'une surface de butée (12) est respectivement prévue sur la bride (2, 3), qui est orientée dans un plan parallèle à un face frontale (B) du point de raccordement (V) et se trouve en retrait d'une grandeur (a) par rapport à la face frontale (B).

12. Procédé de fabrication d'un coude selon l'une des revendications 1 à 11, **caractérisé en ce**

• **que** la moitié de coude respective (1.1, 1.2) est fabriquée à base de matériau rond et massif moyennant un usinage par enlèvement de copeaux dans une première étape de fabrication,

• dans lequel un contour intérieur (i) constitué par des ouvertures de passage à symétrie de révolution et un premier contour extérieur (a1), qui n'est pas adapté directement à l'échangeur de chaleur à faisceaux tubulaires (100) ou bien à ses faisceaux tubulaires (100.1 à 100.n), reçoivent un contour final respectif et un second contour extérieur (a2) adapté directement à l'échangeur de chaleur à faisceaux tubulaires (100) ou bien à ses faisceaux tubulaires est préusiné,

• **que** les deux moitiés de coude (1.1, 1.2) sont reliées l'une à l'autre par continuité de matière à leur point de raccordement (V) respectif au coude (1) dans une deuxième étape de fabrication, et

• **que** le second contour extérieur (a2) adapté à l'échangeur de chaleur à faisceaux tubulaires (100) ou bien à ses faisceaux tubulaires reçoit un contour final moyennant un usinage par enlèvement de copeaux dans une troisième étape de fabrication.

13. Procédé de fabrication selon la revendication 12, **caractérisé en ce que** l'assemblage par continuité de matière des moitiés de coude (1.1, 1.2) est réalisé par un procédé de soudage orbital.

14. Procédé de fabrication selon la revendication 13, **caractérisé en ce que** le procédé de soudage est exécuté en plusieurs passes.

15. Procédé de fabrication selon la revendication 13 ou 14, **caractérisé en ce qu'**un recuit de détente au moins est exécuté à la fin du procédé de soudage ou au cours du procédé de soudage à passes multiples.

16. Procédé de fabrication d'un coude selon l'une des revendications 12 à 15, **caractérisé en ce que qu'**une surface de butée (12) respectivement prévue au niveau des première et seconde brides (2, 3) est positionnée sur une grandeur de retrait (a) de sorte qu'après l'achèvement de l'assemblage par continuité de matière, un appui des surfaces de butée (12) l'une contre l'autre à la suite d'une contraction, qui est due au refroidissement des zones du coude (1) chauffées à cause de la liaison de matière, assure l'achèvement du second contour extérieur (a2) présentant le contour final aux dimensions exactes.

17. Échangeur de chaleur à faisceaux tubulaires (100) pour de grandes pressions de produit, doté de faisceaux tubulaires (100.1, 100.2, ..., 100.i-1, 100.i, 100.i+1, ..., 100.n-1, 100.n) montés en série, dans lequel des tubes intérieurs du faisceau tubulaire sont traversés par un produit (P), et, vues dans le sens d'écoulement du produit (P) et rapportée à n'importe quel faisceau tubulaire (100.i), une sortie (A) du faisceau tubulaire (100.i) est reliée à une entrée (E) d'un faisceau tubulaire (100.i+1) adjacent disposé en aval et une entrée (E) du faisceau tubulaire (100.i) est reliée à une sortie (A) d'un faisceau tubulaire (100.i-1) adjacent disposé en amont, cette liaison l'une à l'autre se faisant en alternance respectivement par l'intermédiaire d'un coude présentant un angle de déviation de 180 degrés de manière perméable aux fluides,
**caractérisé**
**par** un coude (1) présentant les caractéristiques des revendications 1 à 11.

18. Application d'un échangeur de chaleur à faisceaux tubulaires (100) pour de grandes pressions de produit selon la revendication 17 dans une installation de séchage par pulvérisation juste devant ou à une courte distance de la buse dans la tour de séchage.

**100.i-1**

**P**

**V**

(100.1, 100.2, ..., 100.i-1, **100.i**, 100.i+1, ..., 100.n-1, 100.n)

500b 500 700 400.2 200a 200* 200b 400a* 400a 800c 800d

**C**

600

**W**

$D_i$

**DN**

**E**

**(A)**

**A**

**(E)**

**W**

**C**

**1000**

500a 500c 900 400b 400b* 900 **100** 200 300 300* 900 400.1 800 910 800b 800a (1000)

V

P

(Stand der Technik)

*Fig. 1*

**100.i+1**

(C - D)

**Figur 2**

V   Y1.1, Y1.2   11, 15   12

C

10, 14

9, 13

**1.1, 1.2**

X1.1, X1.2   2, 3   M   D

**Figur 4**

Y1.1, Y1.2   V   11, 15

10, 14

12

6, 8

5, 7

P1, P2

9, 13   X1.1 X1.2

**1.1, 1.2**

M   2, 3

**(C - D)**

**Figur 3**

EP 3 183 529 B1

**Figur 5**

# Figur 6
## (C - D)

# Figur 7
## (C - D)

**IN DER BESCHREIBUNG AUFGEFÜHRTE DOKUMENTE**

**In der Beschreibung aufgeführte Patentdokumente**

- US 1790151 A
- DE 9403913 U1
- DE 102005059463 A1
- GB 10792 A
- DE 9403913 U